# EUROPEAN PATENT SPECIFICATION

(11) **EP 2 408 293 B1**
(45) Date of publication and mention of the grant of the patent: **07.08.2013**
(21) Application number: 10709078.9
(22) Date of filing: 16.03.2010
(51) Int. Cl.: A01K 13/00

(54) **HEAD TRUNK BRUSH DEVICE**
BÜRSTENVORRICHTUNG FÜR KOPF UND RUMPF
DISPOSITIF DE BROSSE DE TÊTE ET DE TRONC

(30) Priority: 19.03.2009 NL 1036740
(43) Date of publication of application: 25.01.2012
(73) Proprietor: Lely Patent N.V., 3147 PA Maassluis (NL)
(72) Inventor: VAN DEN BEUKEL, Huibrecht, Johannes, Arjen, NL-3146 CG Maassluis (NL)
(74) Representative: Jennen, Peter Leonardus Hendricus
(86) International application number: PCT/NL2010/000043
(87) International publication number: WO 2010/107301

(56) References cited:
- WO-A-97/28683
- CH-A- 299 281
- DE-A1- 3 515 711
- DE-A1- 4 130 634
- DE-U- 29 920 257
- GB-A- 2 180 444
- US-B1- 6 374 447

## Description

The invention relates to a head trunk brush device for automatically brushing animals, in particular dairy animals such as cows.

It is known to touch dairy animals with a brush to enhance the comfort of the animals. Brushing is a pleasant experience for the animals. With the brush, whose brush bristles are moved with resistance against the body of the animal, there can be achieved a scratching-like effect for which animals such as dairy animals, and in particular cows, have a need from time to time. Such a brush device can be mounted in an accommodation for such dairy animals. In one embodiment, the brush device is fastened to a stationary device.

It is known to enhance the comfort for the animal by driving a brush by a drive member, in such a manner that there is generated a rotation of the brush bristles of which an animal can make use.

German Gebrauchsmuster DE 299 20 257 U1 discloses, for example, a customary brush device for automatically brushing animals. Such customary brush devices comprise two rotatably driven brushes which are provided with brush bristles which extend perpendicularly with respect to the axes of rotation of the brushes. The brushes of the known brush device are elongate.

A serious drawback of the customary brush device is that, during the use of the brush device by the animal, the tail of the animal may be wound around the rotating brushes. As a result thereof, the tail of the dairy animal may get entangled in the brush and, in serious cases, even be torn off.

A possible solution, proposed in practice, provides an uncoupling mechanism of the brush drive member when the latter measures a high resistance. However, such a solution results in an increased complexity of the brush device. Moreover, at the moment of measuring the high resistance, the tail of the animal is already exposed to a considerable tensile force, which is very unpleasant for the animal. There is also a chance that the tail of the animal will remain entangled in the brush after the brush device has stopped. Since there is usually no continuous human supervision of the animals, an animal may panic and still injure itself seriously in an attempt to free itself from the brush device.

It is an object of the present invention to provide an improved head trunk brush device which obviates the aforementioned drawbacks. In particular, it is an object of the invention to provide such a brush device by means of which a tail of an animal which makes use of the brush device can be prevented from getting entangled in a brush and from being injured as a result thereof. In general, it is an object of the invention to make the brushing of the animal and in particular the dairy animal, such as a cow, safer and more comfortable, and in particular to prevent the tail of the animal from getting entangled in the brush device.

According to the invention as defined in claim 1, this object is achieved by means of a head trunk brush device for automatically brushing the head and/or the trunk of an animal, comprising a frame and at least one brush which is connected to the frame and which is rotatable about an axis of rotation. The brush device further comprises a drive member for rotatably driving the brush. The at least one brush comprises a carrier which extends substantially perpendicularly with respect to a drive shaft of the drive member and which is capable of being coupled thereto. The brush is provided with brush bristles extending substantially perpendicularly from the carrier and in the direction of the axis of rotation. By providing the brush bristles on the carrier in such a manner that they extend perpendicularly with respect to the carrier, and thus parallel to the axis of rotation of the brush, the tail of an animal can be prevented in an effective manner from getting entangled in the brush bristles and/or from being wound around the rotating brush. In particular, by means of the brush device according to the invention, it is impossible for the tail of an animal to be drawn into the brush and to be wound around the axis of rotation or drive shaft thereof. If a tail would be wound around the rotating brush, the tail will squeeze the brush bristles together. As a result thereof, the circumference of the brush will decrease towards the free ends of the brush bristles and the tail will slide down from the brush bristles.

In one embodiment of the invention, the free ends of the brush bristles extend substantially in the same brush plane. This provides a flat contact surface for the animal which wishes to be brushed and provides the animal a good control of the brush device, i.e. of the place on the animal's skin where the animal wishes to be brushed.

In one embodiment of the invention, the brush plane does not intersect a plane in which the carrier rotates during the use of the device. In particular, the brush plane is substantially parallel to a plane in which the carrier rotates during the use of the device. Preferably, the ends of the brush bristles; during the use of the device, rotate in a plane which does not intersect the carrier. In this manner, the tail of an animal which is being brushed can be prevented very effectively from being gripped by the brush. It is pointed out that the brush rotates in a flat plane, contrary to a plane of rotation which can, in principle, have any rotation-symmetric shape. This plane is perpendicular to the axis of rotation and extends at a distance from the carrier. According to the invention, it can be safeguarded that the bristles will not wind the tail around the carrier. It should be noted that, in this context, by 'carrier' is meant a combination of the component on which the brush bristles are directly fastened, as well as any part connected thereto which extends between part of the brush bristles, such as a part of a shaft about which the carrier can rotate. It is then important that it is not possible for the ends of the brush bristles to wind the tail around said combination which forms a hard core between the brush bristles and has a fixed spatial position.

Advantageously, the ends form a flat brush surface. Such a surface is well equipped to be able to reach in a proper manner the different body shapes of the trunk and the head of an animal such as a cow. Moreover, in many cases, the actual contact surface with the animal will thus be relatively large, such as approximately equal to the brush surface. In comparison therewith, the relatively small contact surface of the known cylindrical brushes is hardly more than a line.

By a head trunk brush device is meant within the scope of the invention a device which is intended for brushing the head and/or the trunk of an animal, at least a part thereof, such as the back or the flanks. For this purpose, the brush is provided with robust and stiff brush bristles which have dimensions which are suitable for said purpose. The brush has preferably brush bristles with a length between 125 and 250 mm, in particular between 150 and 200 mm, more in particular the brush bristles have a length of 180 mm. Also the brush itself has dimensions which are suitable for said purpose, for example a brush with a cross-section of 20 cm or more. The brushes used in the brush device according to the invention are suitable for providing a massaging action and for removing contaminants from the fur of an animal.

It should be noted that not all the free ends of the brush bristles have to rotate in the same plane in order to achieve the object of the invention. The ends may, for example, form a concave or convex surface during rotation. The advantage of the invention is nevertheless achieved as long as the greater part of the ends, at any rate at least 80% and preferably at least 95%, each rotate in a plane which does neither intersect the carrier, nor the plane in which the carrier rotates during the use. Most preferably, each end will rotate in such a plane.

Advantageously, the ends of brush bristles projecting from the carrier are substantially located along the axis of rotation in a plane which is situated at a distance from the carrier. The ends preferably form a brush surface which, in use, can abut as a whole against the skin of the animal. The ends are then, in use, in contact with the skin and a tail cannot be gripped by those ends, and the brushing efficiency can thus be greater.

Preferably, the brush surface is a surface which is located along the axis of rotation at a distance from the carrier. The brush bristles do not extend radially from the axis of rotation. Owing to the fact that the ends of the brush bristles can be located in one plane, which can, but need not necessarily, be flat, the brush will less quickly be able to grip the tail and the tail is thus prevented from being torn off. A tail is more likely to be flung away than torn along by the rotating brush.

In one embodiment of the invention, the brush bristles are provided in a circular pattern on the carrier. As a result thereof, the brush bristles can be moved to each other in a simple manner if the tail of an animal tends to wind around the brush bristles.

In a further embodiment of the invention, the brush bristles are provided on the carrier in a plurality of brush bristle groups which are located concentrically around the axis of rotation. This makes it possible to use, for example per group, brush bristles with different mechanical properties. Moreover, the groups can be provided on the carrier with a mutual interspace. All these features enhance the safe operation of the brush device.

In a preferred embodiment of the invention, the device further comprising a housing for accommodating the drive member, wherein the housing comprises a collar which extends in the direction of the axis of rotation of the at least one brush, which collar substantially closely fits about the carrier in the circumferential direction thereof and extends at least up to a side of the carrier that faces towards the collar. This results in that access to the side of the carrier that faces away from the brush bristles is almost impossible and that, consequently, it is almost impossible for a tail, or part thereof, to get entangled in a part of the brush different from that of the brush bristles. In particular, it is impossible for the tail to be wound around a drive shaft.

Advantageously, the collar of the housing extends at least up to a side of the carrier that faces away from the collar, on which side the brush bristles are provided, preferably extends beyond the side of the carrier that faces away from the collar. The more the collar extends beyond the circumferential edge of the carrier, the better the access to the rear side thereof is impeded.

In a preferred embodiment, the housing is substantially completely closed. This results in that the drive member, usually an electric drive member, is not accessible for an animal, contrary to the customary brush devices. This enhances the safety during the use of the device, because the animal has no access to moving parts other than the brush and has no access to parts of the device that can become hot, such as the drive member. Moreover, contamination is thus prevented from reaching in a simple manner the moving and/or electrified parts of the brush device.

In a preferred embodiment, the carrier comprises a central portion located around the axis of rotation, on which portion no brush bristles are provided. As a result thereof, the brush bristles can (if necessary) be pressed together in a simple manner without being hindered by adjacent brush bristles. Moreover, this makes it possible to prevent that, when being used by an animal, the brush bristles will be pressed together by the pressure of, for example, the back of the animal, and that the inner brush bristles will then be pressed together to form a fixed core of brush bristles. This pressing together results in a brushing experience which is uncomfortable for an animal.

In one embodiment, the brush bristles mutually enclose an angle which is in all cases smaller than a straight angle, preferably at most equal to a right angle. According to an embodiment of the invention, the brush bristles are disposed substantially parallel to the axis of rotation of the brush. In particular, the outer bristles of the brush form threads projecting from the carrier, against which a tail can bump and by means of which a tail is more likely to be flung away than torn along.

Preferably, the carrier is a disc. The brush bristles can easily be disposed on the disc. In one embodiment, use is made of tufts in which the brush bristles are disposed and connected to the disc.

It is pointed out that in the state of the art teat brushes with a comparable brush bristle implantation are known, such as US-2,952,860 from 1960. However, teat brushes do not involve the problem of a tail getting entangled, are small in order to be able to clean the teats, and are provided with soft flexible bristles for a reliable cleaning of the sensitive teats. See also US-B-6374 447.

In one embodiment, the brush is detachably mounted on a bearing-supported shaft. Said shaft is preferably connected to the drive member. There is thus obtained a device in which the brush can be replaced by uncoupling it from the shaft and replacing it by a new brush. This enhances the userfriendliness for a farmer and allows the farmer to replace the brush frequently.

In one embodiment, the carrier is a disc which is mountable with another side, at the opposite side of the projecting brush bristles, on a flange which is provided on the axis of rotation, and wherein in said other side there is provided a cavity in which said flange can be received. By means of the flange, lateral forces can be transmitted in an effective manner to the axis of rotation which is preferably bearing-supported in the housing of the arm. Preferably, the shaft part or the shaft is accommodated in a bearing-supported manner at a number of locations. Preferably, the shaft is bearing-supported near the provided flange and also bearing-supported at another end, the drive member being disposed between the bearings. By the direct coupling of the drive member to the shaft it is possible to economize on the number of bearings.

It is furthermore advantageous to provide coupling means for coupling the disc to the flange. These may be separate coupling means, such as bolts. In one embodiment, there is provided an alignment member by which, for example, recesses in the disc are aligned with corresponding recesses in the flange, in which case the bolts can be placed in the recesses. In one embodiment, the alignment member can be the shape of the flange and the accommodation space intended therefor.

According to the invention, the device further comprises an arm coupled to the frame, in particular an arm which is pivotable about a substantially horizontal axis, wherein the at least one brush is provided on an end of the arm. The arm can be a fixed component of the frame. In one embodiment, the arm is provided with a brush which is rotatable about an axis of rotation, wherein said brush is coupled to a drive member, in such a manner that the drive member is capable of bringing the brush into rotation in order to brush a part of the body of the animals. The brush comprises a carrier which is provided with brush bristles projecting from the carrier. The distal ends of the brush bristles, remote from the carrier, come into contact with the skin of the dairy animal and provide the enhanced comfort of the animal.

In one embodiment, the drive member is accommodated in the arm and directly coupled to the shaft and the axis of rotation. This results in an efficient coupling and more in particular in a compact design. Additionally, by accommodating the drive member in the arm, the forces to be transmitted can be coupled directly to the axis of rotation. The weight of the drive member can also contribute to the resistance which is transmitted by the brush or the animal.

Preferably, the arm is pivotably coupled to the frame. The arm can move with respect to the frame and in particular with respect to the stationary device to which the frame is connected. As a result thereof, the height of the brush is adjustable to some extent and can be adjusted to the height of the animal. In particular when the back of the animal, i.e. the upper part of the animal, is brushed, this construction makes it possible to take the height of said animal into account.

In one embodiment, there is provided a detection unit which is configured to detect a proximity of an animal and/or a pivoting movement of the arm and is configured to transmit a control signal to the drive member (in response to the detection). The pivoting movement of the arm, in particular the lifting of the arm by the back of the dairy animal which reports at the brush, results in a signal by which the drive member is put into operation. When the brushing of the dairy animal has been finished and the animal moves away from the device, the arm will pivot under the influence of the gravitational force back to its initial position, and a switch-off signal can be transmitted by the detection unit or the signal transmitted to the drive member can be interrupted, in which case the drive member will put the brushing out of operation. The device may also comprise an animal recognition device, such as a transponder reader, and a memory with animal-related information. This information may, for example, comprise for each animal different preferred settings with respect to height, number of revolutions of the brush, etcetera, to be set.

According to the invention, a second brush is mounted to the frame. In one embodiment, this is a brush which is connected to a vertical portion of the frame and which is bearing-supported substantially horizontally and whose brush bristles preferably extend in the horizontal plane.

It is further advantageous if the shaft on which the brush is mounted projects through the carrier of the brush. This makes it possible to achieve a further alignment and centring of the brush around the shaft.

It is further advantageous if the brush is mounted on a bearing-supported shaft, in which case said shaft is hollow and is connectable to a fluid supplies for supplying fluid through the shaft to the brush. There may also be provided a separate fluid supply, such as a sprayer directed to the brush. This makes it possible to supply fluid to the brush, in which case the comfort for the user, the animal, can be enhanced further. The fluid may comprise water, as well as a skin-treating means and/or a veterinary medicine, etcetera. The fluid supplies may be a water supplies, etcetera. A simultaneous supply of water makes it possible to achieve a higher level of comfort for the animal. The brushing results, for example, in rumpling hairs on the skin of the animal, in which case it is possible to supply the fluid under these hairs, contrary to other methods in which water is supplied to the skin of the animal and this water remains on the surface of the fatty hairs. This results, in particular under hot circumstances, in an enhanced comfort for the animals. The skin can thus be cooled in a comfortable manner.

In one embodiment, it is furthermore advantageous if a portion which projects through the carrier is provided with a sprayer. Fluid supplied through the shaft can be spread via the sprayer. In one embodiment, the sprayer is oriented radially, so that the fluid is brought in the brush bristles of the brush and can thus be applied closer to the skin of the brushed animals.

In another embodiment, a fluid spreading member is included in the brush. Via an opening in the carrier, the fluid can be brought in the brush via the shaft. Via the spreading member, the fluid can subsequently be spread by the brush and possibly to the brush bristles.

There is further provided a brush which is couplable to a brush device according to the invention. The preferably exchangeable brush comprises a carrier and brush bristles projecting therefrom, which brush bristles have ends which, during the use of the device, rotate in a plane which is not intersected by the carrier, and which are, in particular, positioned substantially parallel to the axis of rotation of the carrier. The carrier may be provided with a central recess through which a shaft and in particular a hollow shaft having an end on which a sprayer is mounted, can be included. Preferably, the carrier is also provided with recesses through which coupling means, such as bolts, can be placed in order to connect the carrier to the brush device.

Furthermore, there is provided a head trunk brush device having a frame, an arm with a brush which is rotatable about a shaft, in which case fluid can be supplied via the shaft. Such a brush device offers an enhanced comfort for the brushed animals.

The invention will be described in further detail with reference to preferred embodiments. It will be obvious to those skilled in the art that the invention is not limited to the embodiments shown, but comprises all equivalents thereof. The invention comprises all components and features mentioned explicitly and implicitly as well as the advantages mentioned explicitly and implicitly of said respective features. The invention can relate, in a later stage, in particular via a divisional patent application, to other aspects as mentioned in this description.

An embodiment of the invention is described with reference to the drawing, in which:
Figure 1 shows a perspective view of a first embodiment of the invention;
Figure 2 shows a cross-sectional view of the embodiment of Figure 1, and
Figure 3A - 3C show a cross-sectional view of brushes for use with a device according to the invention.

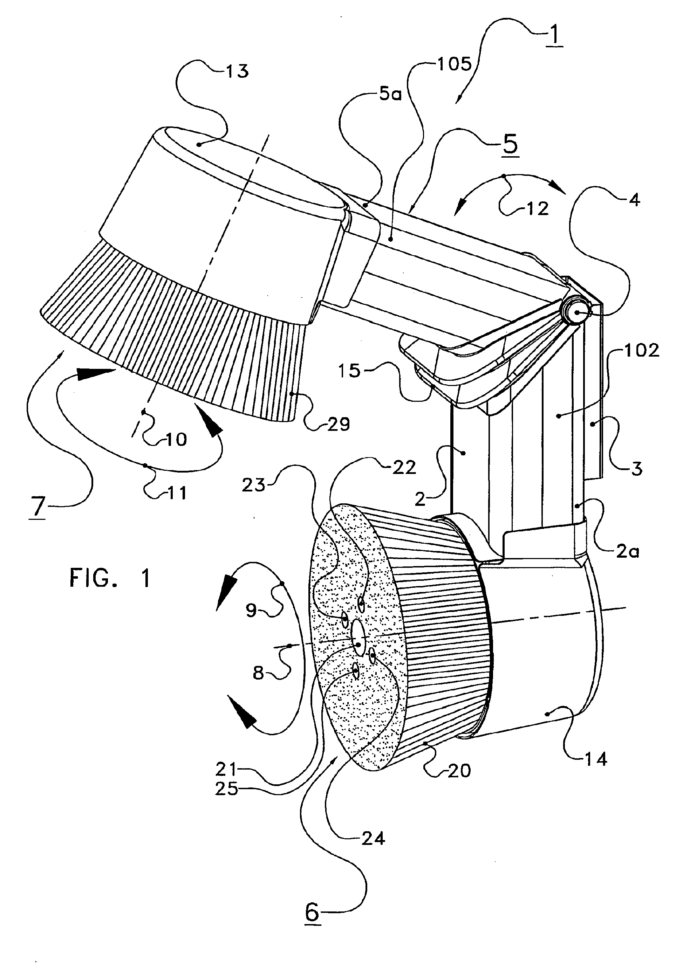

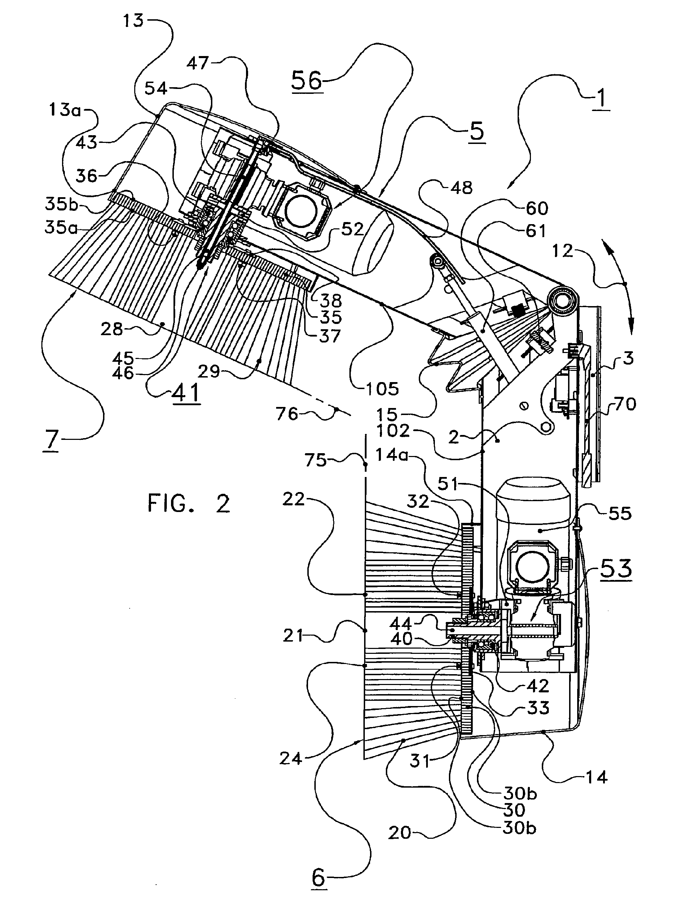

Figure 1 shows a head trunk brush device 1 according to a first embodiment of the invention. The brush device 1 comprises a frame 2 with a coupling means 3 which can be connected to a stationary device, such as a wall or other component of a stable or another device for keeping animals, in particular dairy animals such as cows. In the embodiment shown, coupling means 3 can be connected to a stationary device in a vertical plane, so that the frame 2 is also suspended vertically. An arm 5 is connected to the frame 2 via a shaft 4. A first brush 6 is provided at a distal end 2a of the frame 2, and a second brush 7 is provided in a corresponding manner at a distal end 5a of the arm 5. The first brush 6 is capable of rotating about a first axis of rotation 8, as indicated by a double arrow 9 in Figure 1. In a comparable manner, the second brush 7 is rotatable about a second axis of rotation 10, as indicated by a double arrow 11 in Figure 1. The first axis of rotation 8 extends substantially in the horizontal plane, while axis of rotation 10 extends nearly vertically. This means that the first brush 6 is oriented substantially in a lateral direction, while the second brush 7 is oriented substantially downwards. Both brushes 6, 7 are rotatably driven by a drive member (see Figure 2), as will be explained hereinafter in further detail.

The arm 5 is pivotably connected to the frame 2 and is capable of pivoting about the horizontal axis 4 and consequently in a substantially vertical plane. This is designated by a double arrow 12 in the drawing. By pivoting the arm 5 about the shaft 4, the angle of the second axis of rotation 10 with respect to the horizontal will change.

The brush device 1 is preferably arranged in such a manner that it is possible for an animal such as a dairy animal, in particular a cow, to position itself under the second brush 7 and next to the first brush 6. In that case, the first brush 6 will brush the trunk of the animal, i.e. the lateral side of an animal, and the second brush 7 will brush the back of the animal when the brushes are driven rotatably.

A first hood 13 is disposed at the distal end 5a of the arm 5. A second hood 14 is disposed at the distal end 2a of the frame 2. The first hood 13 partially encloses the second brush 7. The second hood 14 partially encloses the first brush 6. This will be explained in further detail with reference to Figure 2. As is clearly visible in Figure 1, the frame 2 comprises a first housing or housing portion 102. The arm 5 is provided in a comparable manner with a second housing or housing portion 105. Both the first housing 102 and the second housing 105 are substantially closed, so that there is no access from outside to the interior of the frame 2 or the arm 5. This enhances the safety of the brush device 1. For that reason, the brush device 1 is preferably provided with a bellows portion 15 which is provided between the arm 5 and the frame 2 and which is connected to both the arm 5 and the frame 2. As a result thereof, the interior of both the arm 5 and the frame 2 remain closed from outside in any position of the arm 5. The first hood 13 and the second hood 14 each form at their open distal ends a collar 13a, 14a, which collars closely fit the respective brushes 7,6, so that access to the interior of the brush device 1 via the brushes is impeded.

It is visible in Figure 1 that the first brush 6 is provided with brush bristles 20 which extend substantially parallel to the axis of rotation 8. The brush bristles 20 leave a recess 21 around the axis of rotation 8. The recess 21 (see Figure 2 for more details) extends along the axis of rotation 8. Four smaller recesses 22-25 are provided around the recess 21, which recesses 22-25 extend through the brush bristles 20 in a direction parallel to the axis of rotation 8. As will be set out in more detail with reference to Figure 2, a user can reach, via the recesses 22-25, coupling means, such as bolts, by means of which the brush 6 is coupled to a non-shown drive member. This is shown in more detail in Figure 2. The coupling means, for example bolts, can be received in the recesses 22-25 after a shaft part of a (non-shown) drive member has, for example, been aligned with the recess 21, and the coupling members can be connected to the respective elements which are connected to the shaft part of frame 2.

In a corresponding manner, the second brush 7 comprises brush bristles 29 which extend substantially parallel to the second axis of rotation 10 of the second brush 7. Although not visible in Figure 1, the second brush 7 also comprises a centrally located recess and smaller recesses located around the latter in the same manner as the first brush 6. The first and the second brush are preferably identical.

With reference to Figure 2, further details of the brush device 1 will be described hereinafter. For corresponding components the same reference numerals will be used.

In the embodiment of the brush device 1 according to the invention as shown in Figures 1 and 2, the brushes 6, 7 are identical. Of course, it is possible to use different brushes. Since the brushes 6, 7 in the embodiment shown are identical, the details thereof will be described simultaneously.

The brushes 6, 7 comprise brush bristles 20, 29 which extend from a carrier 30, 35, in particular from a first side 30a, 35a thereof. In the example of Figure 2, the carriers 30, 35 are both formed by a circle or disc. The carriers 30, 35 and the brush bristles 20, 29 form a replacement (replaceable) component of the brush device 1.

Both carriers 30, 35 are detachably coupled to a flange 33, 38 which is connected to a shaft part 40, 41 of the brush device 1 by means of coupling means 31, 32, coupling means 36, 37, respectively. In the embodiment shown, the coupling means 31, 32, 36, 37 are bolts which are disposed so as to project through the respective carrier 30, 35 and which are connected to the flanges 33, 38. As described with reference to Figure 1, the coupling means are accessible from outside the brushes 6, 7 through recesses which are provided therein and which are disposed around the central recess 21, 28 in the respective brushes 6, 7. Figure 2 shows the recesses 22 and 24 which offer access for coupling means 32 and 31.

The shaft part 40 associated with the first brush 6 and the shaft part 41 associated with the second brush 7 project through the respective brushes into the two central recesses 21 and 28.

The carriers 30, 35 have a receiving space in which the flange portions 33, 38 are received. In one embodiment, this can be a square receiving space. This means that alignment of the shaft parts 40, 41 with the recess 21, 28 and receipt of the flange portions 33, 38 in the respective receiving space can result in alignment of the recesses in the flange 38 with the recesses 22-25 in the brushes 6, 7. This results in a simplified coupling.

Both shaft parts 40, 41 are bearing-supported in bearings 42, 43 which are connected to the frame 2, the arm 5, respectively. Both shaft parts 41, 40 are formed as a hollow shaft, as is visible with shaft part 40 and is designated by cavity 44. A tube 45 (see second brush 7) with a sprayer 46 provided on its end is received in cavity 44 of the shaft part 41. The tube 45 runs through the shaft part 41 and is connected, via a coupling piece 47, to a fluid supply tube 48, part of which is shown in Figure 2. Fluid supply tube 48 is connected to a (non-shown) fluid supplies and/or to a (non-shown) pump. Via the fluid supply tube 48, fluid, such as water, medicinal liquids or, for example, an anti-fly means, can be led to the sprayer 46 in order to be brought from there in the brush bristles 29 and under the hairs of the animal during the brushing of the skin of the animal. This may result in an enhanced comfort of the animal, in particular for cooling the skin of the animal. In the example of Figure 2, the application of a sprayer is only shown in connection with the second brush 7. However, after reading the description of the invention, it will be obvious to those skilled in the art that also the first brush 6 can be provided with a sprayer.

Via a claw coupling 51, 52, the bearing-supported shaft parts 40, 41 are connected to a shaft 53, 54 of a drive member 55, 56. The drive member 55, 56 is, for example, an electric drive member which is connected to an electric supply source. The drive member 55, 56 can bring the shaft 53, 54 into the desired rotation, i.e. can drive it in a rotatable manner. The use of an electric drive makes it possible to start the rotation of the brush(es) in a quiet manner, so that a startling reaction of an animal can be prevented.

As is clearly visible in Figure 2, both drive members 55, 56 are completely enclosed by the respective housings 102, 105, in which case the space between the two housings is filled up by the bellows 15. By means of the two hoods 13 and 14, which are provided at the ends of the frame 2 and the arm 5, a further closing of the interior of the brush device 1 is obtained. Both hoods 13, 14 of the housings 105, 102 are each provided with a collar 13a, 14a which extends in the direction of the respective axis of rotation 8, 10, which collar 13a, 14a closely fits about the carrier 30, 35 in question in the circumferential direction thereof. Moreover, it is advantageous if the collar 13a, 14a concerned extends at least up to a side 30b, 35b of the carrier 30, 35 in question that faces towards the collar 13a, 14a. In particular and as shown in Figure 2, both collars 13a, 14a extend up to and preferably beyond the side 30a, 35a of the carrier 30, 35 in question that faces away from the collar. In other words, the two carriers 30, 35 are completely enclosed in circumferential direction by a collar. This makes it almost impossible for the interior of the brush device 1 to be reached from outside. In particular, this feature has for its object that the tail of an animal cannot wind around the rotating carrier 30, 35 during the use of the brush device 1, because the collar 13a, 14a keeps the tail and the hairs thereof effectively away from the parts rotating in the interior of the brush device 1.

The drive members 55, 56 (and possibly associated reduction means) are preferably directly mounted to the associated housing 102, 105. This results in a compact unity and also in a construction which is rigid and retains its shape. The two shaft parts 40, 41 are preferably directly coupled to the drive member 55, 56 in question, so that no belt is required for transmitting the rotation from the drive member to the shaft parts 40, 41. By including the drive member 55, 56 in the respective frame portions 2 or arm 5, a further bearing-supporting of the shaft parts 41, 40 is superfluous. This has a positive effect on the constructional simplicity of the brush device 1.

In the embodiment of Figure 2, there is provided a force transmitting means which is active between the frame 2 and the arm 5 which is pivotably mounted thereto. In the embodiment of Figure 2, this is a piston 60 which is disposed between frame portion 2 and arm 5. Said piston 60 is, for example, a gas spring and can be used for setting a force required for the pivoting movement of the arm 5 with respect to the frame 2. It is also possible to make the gas spring settable, for example to be able to use different types of brushes of different weights. Alternatives for a gas spring, such as a customary spring, may also be taken into consideration.

Under the influence of the gravitational force, the arm 5 will experience a force, which is oriented downwards in the figure, which force will cause the arm 5 to fall back in each case to an initial position, in which the axis of rotation 10 of the second brush 7 is, for example, situated near the vertical. The speed and the force at which this takes place depends on the force exerted by the piston 60. An animal, such as a cow, which walks under the brush 7 will cause the brush 7 and the arm 5 to pivot upwards. The brush device 1 is preferably provided with a detection unit which is configured to detect a proximity of an animal and/or the pivoting movement of the arm 5. Such a detection unit is configured to transmit a control signal to the drive member 55, 56 in response to the detection. A suitable detection unit is, for example, an induction sensor 61 which is disposed on the frame 2 and which is able to measure the pivoting movement of arm 5. When the pivoting movement is detected, an electric signal can be transmitted to both or one of the drive members 55, 56, which are put into operation. When the cow leaves the brush device 1, the pivoting movement of the arm back to the initial position can be detected, in which case the drive members 55, 56 are put out of operation. The detection unit may also comprise a movement sensor or both an induction sensor and a movement sensor, so that the proximity of an animal can be detected and the device can be controlled. In the embodiment shown, the brush device 1 is an electric device and comprises an electric current supply 70.

By means of the brush device 1 according to the present invention, it is aimed to provide an improved automatically operating brush device which is, in particular, safer in use. In one aspect, this is achieved by placing the driving and driven parts of the brush device in a substantially completely closed housing. In a further aspect, this is achieved by the design of the brushes 6 and 7.

According to this aspect, the comfort of the animals which make use of the brush device 1 is enhanced in that the brush bristles 20, 29 are disposed parallel to the axis of rotation 8, the axis of rotation 10, respectively. By providing the brush bristles 20, 29 on the carrier 30, 35 in question in such a manner that they extend perpendicularly with respect to the carrier 30, 35, and thus parallel to the axis of rotation 8, 10 of the brush 6, 7 in question, the tail of an animal can be prevented in an effective manner from getting entangled in the brush bristles and/or from being wound around the rotating brush. In particular, by means of the brush device 1 according to the invention, it is impossible for the tail of an animal to be drawn into a rotating brush and to be wound around the axis of rotation or drive shaft thereof. If a tail would be wound around the rotating brush, the tail will squeeze the brush bristles together. As a result thereof, the circumference of the brush will decrease towards the free ends of the brush bristles and the tail will slide down from the brush bristles. As described above, the brushes 6, 7 are provided with a part 21, 28 which is centrally located around the axis of rotation 8, 10. This part 21, 28 is formed by a central portion of the carrier 30, 35 located around the axis of rotation 8, 10, on which portion no brush bristles 20, 29 are provided. From the point of view of the safety aspect, the effect of this central part is that the brush bristles (if required) can be pressed together in a simple manner, without being hindered by adjacent brush bristles. Moreover, this makes it possible to prevent that, when being used by an animal, the brush bristles will be pressed together by the pressure of, for example, the back of the animal, and that the inner brush bristles will then be pressed together to form a fixed core of brush bristles. This pressing together results in a brushing experience which is uncomfortable for an animal.

The free ends of the brush bristles 20, 29 form together a brush surface 75, 76. This has the advantage that winding of the tail around the brush will occur considerably less frequently. It is not necessary for all the free ends of the brush bristles 20, 29 to be located in the same plane. What is important, is that the brush bristles extend substantially in the same direction as the axis of rotation of the brush in question.

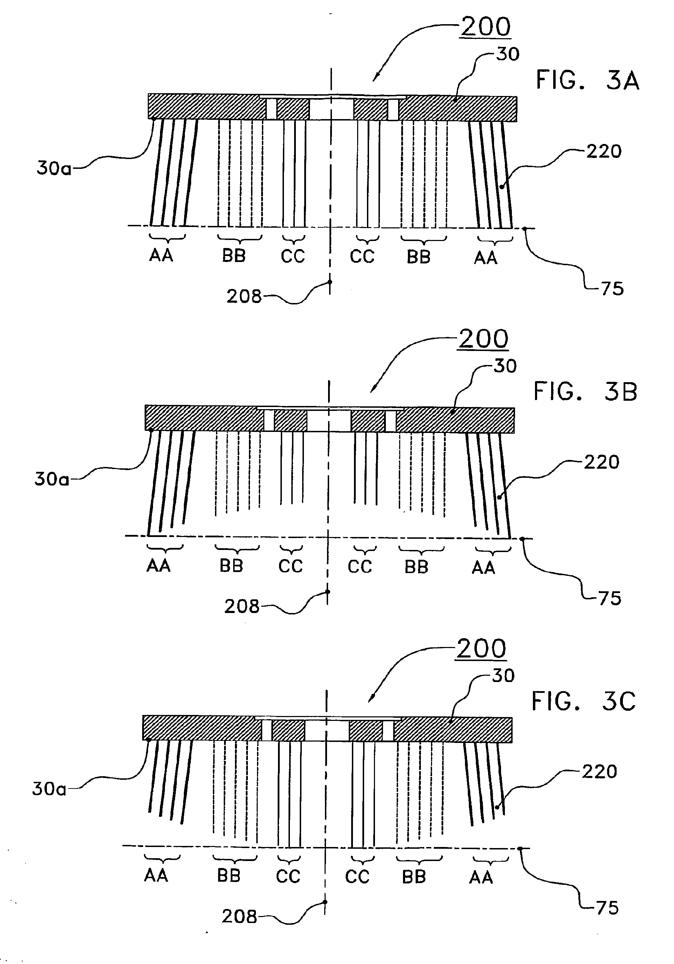

Alternative embodiments of a brush for use with the brush device 1 according to the present invention are shown in Figures 3A to 3C.

Figures 3A, 3B and 3C show a number of alternative embodiments of a brush 200 for use in the brush device 1 according to the invention. The brush 200 can be used both by means of the frame 2 and by means of the arm 5. The brush 200 of Figure 3A is substantially equal to the brushes 6 and 9 described with reference to Figures 1 and 2 and comprises again a substantially flat carrier 30 with a side 30a on which a plurality of brush bristles 220 are provided. The brush bristles 220 extend again in a direction which is substantially parallel to the axis of rotation 208 of the brush 200, about which axis the brush 200 is rotatable during use.

The brush 200 as shown in Figure 3A corresponds, as regards the shape of the brush bristles 220, the most to the brushes 6, 7 as shown in Figures 1 and 2. However, the brush bristles 220 of the brush 200 of Figure 3A are mutually different, i.e. the brush bristles 220 do not all have the same mechanical properties. In particular, the brush bristles 220 are provided in a number of groups of brush bristles 220 having the same or at least corresponding mechanical properties. These groups are designated in the drawing by AA, BB and CC. It will be obvious to those skilled in the art that the number of groups of brush bristles need not be limited to the number shown. It is, for example, possible to provide more, but also fewer, groups of brush bristles.

The different groups AA, BB, CC of brush bristles may, for example, have a different bending stiffness. It is, for example, possible for the brush bristles of group AA, i.e. the group that is located most radially outwardly, to have a smaller bending stiffness than brush bristles of a group that is located radially inwardly. This reduces the resistance against bending of the bristles and makels it easier for a tail to bend the bristles inwardly at the moment when the tail is wound around the brush bristles. However, it is also possible to make, on the contrary, the outer brush bristles less flexible. As a result thereof, the shape of the brush is better conserved during use and the position of the brush bristles perpendicular to the carrier is better maintained.

It is clearly visible in the drawing that the brush bristles 220 are provided on the carrier 30 in a plurality of groups which are concentrically located around the axis of rotation 208. This results in an improved inward movement of the brush bristles 220.

The ends of the brush bristles 220 of the brush 200 of Figure 3A are (substantially) all located in the same plane 75 as shown in Figure 2. Figure 3B indicates that the ends of the brush bristles 220 form a concave brush surface, at the location where the ends of the brush bristles 220 form a convex brush surface in Figure 3C.

According to another aspect, by means of the embodiment according to the present description, the advantage is achieved of cooling the skin of the animal by means of a fluid such as water, it being possible to apply the cooling under the outer layer, formed by fatty hairs, of the skin of the animal. Owing to the fact that a sprayer 46 is applied on an end of a hollow shaft part 41, which end projects through the plane of the carrier 30, 35 on which the brush bristles 20, 29 are disposed, fluid can be supplied to the brush bristles which can subsequently supply it to very near to the skin during the rumpling of the outer skin parts, such as the hairs of the animal. Spraying member 46 can squirt the supplied fluid laterally or radially in the brush bristles 29 so that a suchlike spreading is obtained.

Within the scope of the invention, various other embodiments are possible as well. It will be obvious to those skilled in the art that all other embodiments in which the idea of the present invention is applied will also fall within the scope of this invention.

In particular, the present invention is shown with reference to the drawing in which a brush device is shown that is provided with at least two brushes for brushing an animal. However, but not according to the invention, there may be provided a brush device which is provided with only one brush. This single brush may then be provided on the frame or on the arm. In the first case, the arm may, for example, be omitted. It is also possible to provide a brush device comprising more than two brushes or a brush device which is composed of a plurality of brush devices as shown in the drawing. After reading the description of the invention, it will be obvious to those skilled in the art that different combinations are possible within the scope of the inventive idea.

## Claims

1. Head trunk brush device (1) for automatically brushing the head and/or the trunk of an animal, comprising:
- a frame (2);
- at least one rotatable brush (6, 7) connected to the frame (2) and rotatable about an axis of rotation (8, 10), and
- a drive member (55, 56) for rotatably driving the brush (6, 7), wherein said brush (6, 7) comprises a carrier (30, 35) which extends substantially perpendicularly with respect to a drive shaft (40, 41) of the drive member (55, 56) and is capable of being coupled thereto, and is provided with brush bristles (20, 29) extending substantially perpendicularly from the carrier (6, 7) and in the direction of the axis of rotation (8, 10),
the device further comprising an arm (5) coupled to the frame (2), in particular an arm (5) which is pivotable about a substantially horizontal axis, wherein the at least one brush (7) is provided on an end of the arm (5), and a second brush (6) which is provided on the frame (2).

2. Brush device (1) according to claim 1, wherein the free ends of the brush bristles (20, 29) extend substantially in the same brush plane (75, 76).

3. Brush device (1) according to claim 2, wherein the brush plane (75, 76) does not intersect a plane in which the carrier (30, 35) rotates during the use of the device (1).

4. Brush device (1) according to claim 2 or 3, wherein the brush plane (75, 76) is substantially parallel to a plane in which the carrier (30, 35) rotates during the use of the device (1).

5. Brush device (1) according to any one of the preceding claims, wherein the ends of the brush bristles (20, 29), during the use of the device, rotate in a plane which does not intersect the carrier (30, 35).

6. Brush device (1) according to any one of the preceding claims, wherein the brush bristles (20, 29) are provided in a circular pattern on the carrier (30, 35).

7. Brush device (1) according to any one of the preceding claims, wherein the brush bristles (20, 29) are provided on the carrier (30, 35) in a plurality of brush bristle groups (AA, BB, CC) which are located concentrically around the axis of rotation (8, 10).

8. Brush device (1) according to any one of the preceding claims, further comprising a housing (102, 105) for accommodating the drive member (55, 56), wherein the housing (102, 105) comprises a collar (13a, 14a) which extends in the direction of the axis of rotation (8, 10) of the at least one brush (6, 7), which collar (13a, 14a) substantially closely fits about the carrier (30, 35) in the circumferential direction thereof and extends at least up to a side (30b, 35b) of the carrier (30, 35) that faces towards the collar (13, 14a).

9. Brush device (1) according to claim 8, wherein the collar (13a, 14a) of the housing (102, 105) extends at least up to a side (30a, 35a) of the carrier (30, 35) that faces away from the collar (13a, 14a), on which side the brush bristles (20, 29) are provided, preferably extends beyond the side (30a, 35a) of the carrier (30, 35) that faces away from the collar (13a, 14a).

10. Brush device (1) according to any one of claims 8 or 9, wherein the housing (102, 105) is substantially completely closed.

11. Brush device (1) according to any one of the preceding claims, wherein the carrier (30, 35) comprises a central portion located around the axis of rotation (8, 10), on which portion no brush bristles (20, 29) are provided.

12. Brush device (1) according to any one of the preceding claims, wherein the brush bristles (20, 29) mutually enclose an angle which is in all cases smaller than a straight angle.

13. Brush device (1) according to any one of the preceding claims, wherein the brush (6, 7) is detachably mounted on a bearing-supported shaft (40, 41), which shaft (40, 41) is connected to the drive member (55, 56).

14. Brush device (1) according to any one of the preceding claims, wherein the carrier (30, 35) is a disc, wherein the disc is in particular provided, on a side (30b, 35b) thereof that is opposite the projecting brush bristles (20), with a cavity (44) in which a flange (33, 38) disposed on the axis of rotation (8, 10) can be received.

15. Brush device (1) according to claim 14, wherein coupling means (31, 32, 36, 37) couple the disc to the flange (33, 38).

16. Brush device (1) according to any one of the preceding claims, further comprising a detection unit which is configured to detect a proximity of an animal and/or a pivoting movement of the arm (5) and is configured to transmit a control signal to the drive member (55, 56) in response to the detection.

17. Brush device (1) according to any one of the preceding claims, wherein a bearing-supported shaft (40, 41) on which the brush (6, 7) is mounted and which is connected to the drive member (55, 56), extends through the carrier (30, 35) of the brush (6, 7).

18. Brush device (1) according to any one of the preceding claims, wherein a bearing-supported shaft (40, 41) on which the brush (6, 7) is mounted and which is connected to the drive member (55, 56), is hollow and is connectable to a fluid supplies for supplying fluid through the shaft (40, 41) to the brush (6, 7).

19. Brush device (1) according to claim 18, wherein an end of the shaft (40, 41) that extends through the carrier (30, 35) is provided with a sprayer (46).

## Patentansprüche

1. Bürstenvorrichtung für Kopf und Rumpf (1) zum automatischen Bürsten des Kopfes und/oder des Rumpfes eines Tieres, umfassend:
- einen Rahmen (2);
- wenigstens eine drehbare Bürste (6, 7), welche mit dem Rahmen (2) verbunden und drehbar um eine Rotationsachse (8, 10) ist, und
- ein Antriebselement (55, 56) zum drehenden Antreiben der Bürste (6, 7), wobei die Bürste (6, 7) einen Träger (30, 35) umfasst, welcher sich im Wesentlichen senkrecht in Bezug auf die Antriebswelle (40, 41) des Antriebselements (55, 56) erstreckt und in der Lage ist, mit dieser gekoppelt zu werden und mit Bürstenborsten (20, 29) versehen ist, welche sich im Wesentlichen senkrecht vom Träger (6, 7) und in die Richtung der Rotationsachse (8, 10)erstrecken,
wobei die Vorrichtung des Weiteren einen Arm (5) umfasst, welcher mit dem Rahmen (2) gekoppelt ist, insbesondere einen Arm (5), welcher drehbar um eine im Wesentlichen horizontale Achse ist, wobei die wenigstens eine Bürste (7) auf einem Ende des Arms (5) vorgesehen ist, und eine zweite Bürste (6) umfasst, welche auf dem Rahmen (2) vorgesehen ist.

2. Bürstenvorrichtung (1) nach Anspruch 1, wobei die freien Enden der Bürstenborsten (20, 29) sich im Wesentlichen in der gleichen Bürstenebene (75, 76) erstrecken

3. Bürstenvorrichtung (1) nach Anspruch 2, wobei die Bürstenebene (75, 76) nicht eine Ebene schneidet, in welcher sich der Träger (30, 35) während des Betriebs der Vorrichtung (1) dreht.

4. Bürstenvorrichtung (1) nach Anspruch 2 oder 3, wobei die Bürstenebene (75, 76) im Wesentlichen parallel zu einer Ebene ist, in welcher sich der Träger (30, 35) während des Betriebs der Vorrichtung (1) dreht.

5. Bürstenvorrichtung (1) nach einem der vorhergehenden Ansprüche, wobei sich die Enden der Bürstenborsten (20, 29) während des Betriebs der Vorrichtung in einer Ebene drehen, welche nicht den Träger (30, 35) schneidet.

6. Bürstenvorrichtung (1) nach einem der vorhergehenden Ansprüche, wobei die Bürstenborsten (20, 29) in einem runden Muster auf dem Träger (30, 35) vorgesehen sind.

7. Bürstenvorrichtung (1) nach einem der vorhergehenden Ansprüche, wobei die Bürstenborsten (20, 29) auf dem Träger (30, 35) in einer Mehrzahl von Bürstenborstengruppen (AA, BB, CC) vorgesehen sind, welche konzentrisch um die Rotationsachse (8, 10) angeordnet sind.

8. Bürstenvorrichtung (1) nach einem der vorhergehenden Ansprüche, des Weiteren umfassend ein Gehäuse (102, 105) zum Aufnehmen des Antriebselements (55, 56), wobei das Gehäuse (102, 105) einen Kragen (13a, 14a) umfasst, welcher sich in die Richtung der Rotationsachse (8, 10) der wenigstens einen Bürste (6, 7) erstreckt, wobei der Kragen (13a, 14a) im Wesentlichen den Träger (30, 35) in der Umfangsrichtung eng umgibt und sich wenigstens bis zu einer Seite (30b, 35b) des Trägers (30, 35) erstreckt, die dem Kragen (13, 14a) zugewandt ist.

9. Bürstenvorrichtung (1) nach Anspruch 8, wobei der Kragen (13a, 14a) des Gehäuses (102, 105) sich wenigstens bis zu einer Seite (30a, 35a) des Trägers (30, 35) erstreckt, welche weg vom Kragen (13a, 14a) gewandt ist, wobei auf dieser Seite die Bürstenborsten (20, 29) vorgesehen sind, wobei er sich vorzugsweise über die Seite (30a, 35a) des Trägers (30, 35) hinaus erstreckt, welche dem Kragen (13a, 14a) abgewandt ist.

10. Bürstenvorrichtung (1) nach einem der Ansprüche 8 oder 9, wobei das Gehäuse (102, 105) im Wesentlichen völlig abgeschlossen ist.

11. Bürstenvorrichtung (1)nach einem der vorhergehenden Ansprüche, wobei der Träger (30, 35) einen zentralen Abschnitt umfasst, welcher um die Rotationsachse (8, 10) herum angeordnet ist, wobei auf diesem Abschnitt keine Bürstenborsten (20, 29) vorgesehen sind.

12. Bürstenvorrichtung (1)nach einem der vorhergehenden Ansprüche, wobei die Bürstenborsten (20, 29) gemeinsam einen Winkel einschließen, welcher in allen Fällen kleiner ist als ein gestreckter Winkel.

13. Bürstenvorrichtung (1)nach einem der vorhergehenden Ansprüche, wobei die Bürste (6, 7) abnehmbar auf einer kugelgelagerten Welle (40, 41) angebracht ist, wobei die Welle (40, 41) mit dem Antriebselement (55, 56) verbunden ist.

14. Bürstenvorrichtung (1)nach einem der vorhergehenden Ansprüche, wobei der Träger (30, 35) eine Scheibe ist, wobei die Scheibe insbesondere auf einer Seite (30b, 35b), die entgegengesetzt zu den vorragenden Bürstenborsten (20) liegt, mit einer Ausnehmung (44) versehen ist, in welcher ein der auf der Rotationsachse (8, 10) angeordneter Flansch (33, 38) aufgenommen werden kann.

15. Bürstenvorrichtung (1)nach Anspruch 14, wobei Kupplungsmittel (31, 32, 36, 37) die Scheibe mit dem Flansch (33, 38) kuppeln.

16. Bürstenvorrichtung (1)nach einem der vorhergehenden Ansprüche, des Weiteren umfassend eine Erfassungseinheit, welche so konfiguriert ist, um eine Nähe eines Tieres und/oder eine drehende Bewegung des Arms (5) zu erfassen, und so konfiguriert ist, um ein Steuersignal an das Antriebselement (55, 56) als Reaktion auf das Erfassen zu übertragen.

17. Bürstenvorrichtung (1)nach einem der vorhergehenden Ansprüche, wobei eine lagergestützte Welle (40, 41), auf welcher die Bürste (6, 7) angebracht ist und welche mit dem Antriebselement (55, 56) verbunden ist, sich durch den Träger (30, 35) der Bürste (6, 7) erstreckt.

18. Bürstenvorrichtung (1)nach einem der vorhergehenden Ansprüche, wobei eine lagergestützte Welle (40, 41), auf welcher die Bürste (6, 7) angebracht ist und welche mit dem Antriebselement (55, 56) verbunden ist, hohl ist und mit einer Fluidversorgung zum Versorgen der Bürste (6, 7) mit Fluid durch die Welle (40, 41) verbindbar ist.

19. Bürstenvorrichtung (1)nach Anspruch 18, wobei ein Ende der Welle (40, 41), welches sich durch den Träger (30, 35) erstreckt, mit einem Sprüher (46) versehen ist.

## Revendications

1. Dispositif de brosse de tête et de tronc (1) pour le brossage automatique de la tête et/ou du tronc d'un animal, comprenant :
- un cadre (2) ;
- au moins une brosse rotative (6, 7) reliée au cadre (2) et pouvant tourner autour d'un axe de rotation (8, 10), et
- un élément d'entraînement (55, 56) pour l'entraînement rotatif de la brosse (6, 7), dans lequel ladite brosse (6, 7) comprend un support (30, 35) qui s'étend sensiblement perpendiculairement à un arbre d'entraînement (40, 41) de l'élément d'entraînement (55, 56) et est capable d'être couplé à celui-ci, et est dotée de soies (20, 29) s'étendant sensiblement perpendiculairement depuis le support (6, 7) et dans la direction de l'axe de rotation (8, 10),
le dispositif comprenant en outre un bras (5) couplé au cadre (2), en particulier un bras (5) qui peut pivoter autour d'un axe sensiblement horizontal, dans lequel l'au moins une brosse (7) est prévue sur une extrémité du bras (5), et une seconde brosse (6) est prévue sur le cadre (2).

2. Dispositif de brosse (1) selon la revendication 1, dans lequel les extrémités libres des soies (20, 29) s'étendent sensiblement dans le même plan de brosse (75, 76).

3. Dispositif de brosse (1) selon la revendication 2, dans lequel le plan de brosse (75, 76) ne croise pas un plan, dans lequel le support (30, 35) tourne pendant l'utilisation du dispositif (1).

4. Dispositif de brosse (1) selon la revendication 2 ou 3, dans lequel le plan de brosse (75, 76) est sensiblement parallèle à un plan, dans lequel le support (30, 35) tourne pendant l'utilisation du dispositif (1).

5. Dispositif de brosse (1) selon l'une quelconque des revendications précédentes, dans lequel les extrémités des soies (20, 29), pendant l'utilisation du dispositif, tournent dans un plan qui ne croise pas le support (30, 35).

6. Dispositif de brosse (1) selon l'une quelconque des revendications précédentes, dans lequel les soies (20, 29) sont prévues en un motif circulaire sur le support (30, 35).

7. Dispositif de brosse (1) selon l'une quelconque des revendications précédentes, dans lequel les soies (20, 29) sont prévues sur le support (30, 35) dans une pluralité de groupes de soies (AA, BB, CC) qui sont situés de manière concentrique autour de l'axe de rotation (8, 10).

8. Dispositif de brosse (1) selon l'une quelconque des revendications précédentes, comprenant en outre un logement (102, 105) pour loger l'élément d'entraînement (55, 56), dans lequel le logement (102, 105) comprend un collier (13a, 14a) qui s'étend dans la direction de l'axe de rotation (8, 10) de l'au moins une brosse (6, 7), lequel collier (13a, 14a) s'ajuste sensiblement finement autour du support (30, 35) dans sa direction circonférentielle et s'étend au moins jusqu'à un côté (30b, 35b) du support (30, 35) qui est dirigé vers le collier (13, 14a).

9. Dispositif de brosse (1) selon la revendication 8, dans lequel le collier (13a, 14a) du logement (102, 105) s'étend au moins jusqu'à un côté (30a, 35a) du support (30, 35) qui s'éloigne du collier (13a, 14a), sur lequel côté les soies (20, 29) sont prévues, s'étend de préférence au-delà du côté (30a, 35a) du support (30, 35) qui s'éloigne du collier (13a, 14a).

10. Dispositif de brosse (1) selon l'une quelconque des revendications 8 ou 9, dans lequel le logement (102, 105) est fermé sensiblement complètement.

11. Dispositif de brosse (1) selon l'une quelconque des revendications précédentes, dans lequel le support (30, 35) comprend une partie centrale située autour de l'axe de rotation (8, 10), sur laquelle partie aucune soie (20, 29) n'est prévue.

12. Dispositif de brosse (1) selon l'une quelconque des revendications précédentes, dans lequel les soies (20, 29) renferment mutuellement un angle qui est dans tous les cas plus petit qu'un angle droit.

13. Dispositif de brosse (1) selon l'une quelconque des revendications précédentes, dans lequel la brosse (6, 7) est montée de manière détachable sur un arbre sur palier (40, 41) qui est relié à l'élément d'entraînement (55, 56).

14. Dispositif de brosse (1) selon l'une quelconque des revendications précédentes, dans lequel le support (30, 35) est un disque, dans lequel le disque est prévu en particulier sur un côté (30b, 35b) de celui-ci qui est opposé aux soies en saillie (20) avec une cavité (44) pouvant recevoir une bride (33, 38) disposée sur l'axe de rotation (8, 10).

15. Dispositif de brosse (1) selon la revendication 14, dans lequel des moyens de couplage (31, 32, 36, 37) couplent le disque à la bride (33, 38).

16. Dispositif de brosse (1) selon l'une quelconque des revendications précédentes, comprenant en outre une unité de détection qui est configurée pour détecter une proximité d'un animal et/ou un mouvement pivotant du bras (5) et qui est configurée pour transmettre un signal de commande à l'élément d'entraînement (55, 56) en réponse à la détection.

17. Dispositif de brosse (1) selon l'une quelconque des revendications précédentes, dans lequel un arbre sur palier (40, 41), sur lequel la brosse (6, 7) est montée, et qui est relié à l'élément d'entraînement (55, 56), s'étend au travers du support (30, 35) de la brosse (6, 7).

18. Dispositif de brosse (1) selon l'une quelconque des revendications précédentes, dans lequel un arbre sur palier (40, 41), sur lequel la brosse (6, 7) est montée, et qui est relié à l'élément d'entraînement (55, 56), est creux et peut être relié à une alimentation en fluide pour l'alimentation en fluide par l'arbre (40, 41) de la brosse (6, 7).

19. Dispositif de brosse (1) selon la revendication 18, dans lequel une extrémité de l'arbre (40, 41), qui s'étend au travers du support (30, 35), est dotée d'un pulvérisateur (46).
